# EUROPÄISCHE PATENTSCHRIFT

(11) **EP 1 722 625 B1**
(45) Veröffentlichungstag und Bekanntmachung des Hinweises auf die Patenterteilung: **09.04.2008**
(21) Anmeldenummer: 05715062.5
(22) Anmeldetag: 01.03.2005
(51) Int. Cl.: A01K 13/00, A45D 29/02

(54) **CHIRURGISCHES KRALLENSCHNEIDWERKZEUG**
SURGICAL CLAW CLIPPERS
COUPE-GRIFFES CHIRURGICAL

(30) Priorität: 02.03.2004 DE 102004011012
(43) Veröffentlichungstag der Anmeldung: 22.11.2006
(73) Patentinhaber: Kabella, Klaus, 16775 Zernikow (DE)
(72) Erfinder: Kabella, Klaus, 16775 Zernikow (DE)
(74) Vertreter: Kietzmann, Manfred
(86) Internationale Anmeldenummer: PCT/DE2005/000386
(87) Internationale Veröffentlichungsnummer: WO 2005/084423

(56) Entgegenhaltungen:
- US-A1- 2002 178 585
- US-B1- 6 220 251

## Beschreibung

Die Erfindung betrifft chirurgisches Krallenschneidwerkzeug, wie Krallenzange oder Krallenschere für ein möglichst schmerzfreies Beschneiden von Krallen.

### [Stand der Technik]

Das Schneiden von Krallen, insbesondere bei Hunden, gehört zur unabdingbaren Pflege der Tiere. Erfolgt dies nicht, kommt es zu Missbildungen und damit verbundenen Schmerzen.

Wird nun beim Beschneiden zu viel von der Kralle abgeschnitten, werden die sich im Kralleninneren befindlichen Blutgefäße verletzt. Das Tier erleidet Schmerzen und Blutungen.

Die Ursache für die unsachgemäßen Schnitte liegt meist darin begründet, dass der Verlauf der Blutgefäße, insbesondere bei dunklen Krallen, visuell nicht erkannt wird.

Aus der WO 02/051242 A1 ist eine Sicherheits- Krallenzange für Haustiere bekannt, die in der Lage sein soll, eine Klaue so abzuschneiden, dass eine Verletzung der Blutgefäße in der Kralle ausgeschlossen ist. Die Krallenzange besitzt dazu eine Einstecköffnung, deren Tiefe durch einen Stellbolzen verändert wird und somit die Länge des abzuschneidenden Krallenstückes begrenzt ist.

Der Nachteil dieser Erfindung besteht darin, dass das Einstellen des abzuschneidenden Krallenstückes nach Gefühl erfolgt und, will man keine Blutgefäße treffen, eher zu wenig als zu viel abgeschnitten wird. Ein Abschneiden ohne Verletzung ist, da der Verlauf der Blutäderchen sehr unterschiedlich sein kann, nicht ausgeschlossen.

Des weiteren ist in der Patentschrift US 2 112 790 ein Krallenabschneider für einen sauberen und schmerzfreien Schnitt beschrieben.

Um beim Schneiden der Krallen keine Blutgefäße zu treffen, wird in der Beschreibung vorgeschlagen, den gesamten Krallenabschneider mit der Kralle gegen ein Licht zu halten, damit die Blutgefäße durchscheinen und diese beim Schneiden nicht verletzt werden.

Diese Methode ist sehr umständlich. Um das Licht der Lampe optimal auf die Schnittstelle zu richten, sind mehrere Hände erforderlich und ein unbeabsichtigtes Verletzen der Gefäße ist dennoch nicht ausgeschlossen.

Die US-A1-2002/178585 offenbart ebenfalls ein Nagelschneidwerkzeug mit Leuchtmitteln.

### [Aufgabe der Erfindung]

Aufgabe der Erfindung ist es, ein chirurgisches Krallenschneidwerkzeug zu schaffen, das eine visuelle Erkennung des Blutgefäßverlaufes unmittelbar vor dem Schnitt ermöglicht, so dass der exakte Schnittpunkt außerhalb von lebendem Zellgewebe bestimmt werden kann und der Schnitt somit schmerzfrei erfolgt.

Die Aufgabe wird mit den Merkmalen des 1. Patentanspruchs gelöst. Vorteilhafte Weiterentwicklungen und Ausgestaltungen sind Gegenstand der Unteransprüche.

Das chirurgische Krallenschneidwerkzeug besteht aus zwei, mittels zwei Griffen scheren- oder zangenförmig gegeneinander bewegbaren Schermessern, die eine runde oder gewölbte Schneidöffnung freigeben. Unterhalb der Schneidöffnung ist, fest verbunden mit einem Bauteil des Krallenschneidwerkzeuges, eine Durchleuchtungsvorrichtung mit Leuchtmitteln, vorzugsweise lichtstarke Leuchtdioden angeordnet.

Die Durchleuchtungsvorrichtung sendet dabei ein Licht aus, welches eine Kralle so durchleuchten kann, dass die darin befindlichen Blutgefäße deutlich visuell erkennbar sind.

Für unterschiedlich pigmentierte Krallen können Leuchtmittel unterschiedlicher Lichtstärken und/oder Wellenlängen eingesetzt werden.

Das Krallenschneidwerkzeug kann in unterschiedlichen Ausführungen un d Formgestaltungen als Krallenzange oder Krallenschere ausgeführt sein. Die Durchleuchtungsvorrichtung ist dabei so an dem Werkzeugkörper anzuordnen und zu befestigen, dass die Leucht- oder Strahlenrichtung auf die Schneidöffnung oder möglichst nahe auf diese gerichtet ist. Sie kann dabei unterhalb der Schneidöffnung an dem unteren Schermesser oder einer besonderen Halteeinrichtung, die mit dem Zangenkörper verbunden ist, angeordnet sein.

Auch ein Heranführen des Lichtes an die Schneidöffnung mittels Lichtleiter ist denkbar.

Ferner ist es von Vorteil, der Durchleuchtungsvorrichtung einen Sensor zuzuordnen, der in der Lage ist, bestimmte spektrale Wellenlängen, z. B. die des roten Blutfarbstoffes, zu erfassen. Der Sensor ist dabei auf den Lichtkegel der Durchleuchtungsvorrichtung und gleichzeitig in den Bereich der Schneidöffnung gerichtet. Bei Erfassung des roten Blutfarbstoffes löst der Sensor ein akustisches und/oder optisches Signal aus und/oder die Schermesser werden blockiert.

Für einen äußerst exakten Schnitt und im Hinblick auf eine ortsfeste Durchleuchtung ist es zweckmäßig, die Schermesser oder die Schenkel, die die Schermesser halten, nicht auf einer Kreisbahn, sondern parallel zu führen. In diesem Fall sind auch der Lichtsender (Durchleuchtungseinrichtung) und der Lichtempfänger (Sensor) exakt aufeinandergerichtet. Da sowohl Sender als auch Empfänger einen gewissen Streukegel aufweisen ist dies nicht zwingend notwendig.

In einer weiteren Ausgestaltung ist an dem Krallenschneidwerkzeug eine Festhalte- oder Klemmeinrichtung angeordnet, die die zu beschneidende Kralle kurz vor dem Schneidvorgang durch einen leichten Druck auf die Griffe festhält. Durch einen nachfolgenden kräftigeren Druck, gibt die elastisch oder federnd au sgeführte Festhalteeinrichtung nach und die Schermesser schneiden die Kralle ab. Die Festhalteeinrichtung ist dazu, je nach Ausführung und Aufbau des Krallenschneidwerkzeuges, vor oder hinter den Schermessern angeordnet.

Die geometrische Ausführung des Krallenschneidwerkzeuges, ob zum Beispiel als Zange oder Schere, kann zusammen mit der Durchleuchtungsvorrichtung unter Beibehaltung der Funktionalität in unterschiedlichen Varianten und Formen variieren.

### [Beispiele]

An Hand von Zeichnungen wird das chirurgische Krallenschneidwerkzeug in einer bevorzugten Ausführung näher erläutert.

Es zeigen:
- **Fig. 1**: das Krallenschneidwerkzeug im geöffneten Zustand mit einer möglichen Anordnung von Durchleuchtungsvorrichtung und Sensor,
- **Fig. 2**: eine Darstellung der Schneidöffnung bei geöffnetem Werkzeug nach **Fig. 1****,**
- **Fig. 3**: eine Darstellung des unteren Schenkels mit einer Krallenauswurföffnung,
- **Fig. 4**: aufeinanderfolgende Darstellungen **a, b, c** und **d,** die das Abschneiden einer Kralle mit dem Krallenschneidwerkzeug erläutern.

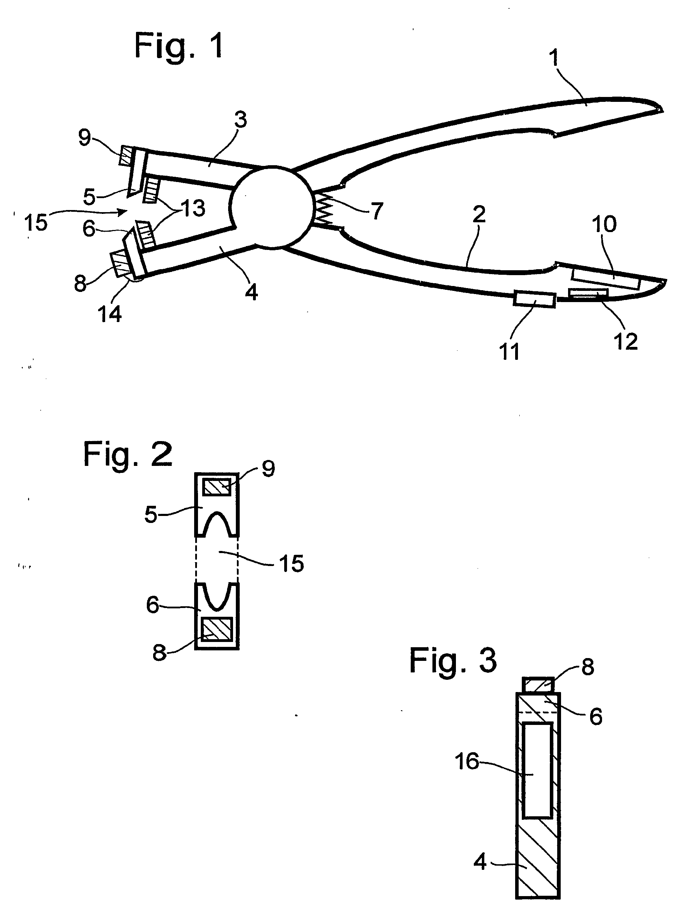

In **Fig. 1** ist ein Krallenschneidwerkzeug in Form einer Krallenzange mit offenen Schermessern **5, 6** und somit offener Schneidöffnung **15** (siehe auch **Fig. 2**) dargestellt. Durch Zusammendrücken der Griffe **1, 2** werden die Schermesser **5, 6** über zwei Schenkel **3, 4** gegeneinander bewegt und die Schneidöffnung **15** geschlossen. Eine Feder **7** sorgt dafür, dass bei nachlassendem Druck auf die Griffe **1,2** die Schneidöffnung **15** sich wieder selbsttätig öffnet.

Am unteren Schermesser **6** oder auch an einer besonderen Halteeinrichtung ist unterhalb der Schneidöffnung **15** eine Durchleuchtungsvorrichtung **8** angeordnet. Der Grundkörper der Durchleuchtvorrichtung **8** ist fest, bevorzugt jedoch lösbar, am Schermesser **6** oder an dem unteren Schenkel **4** befestigt.

Die Stromversorgung für die Durchleuchtungsvorrichtung **8** erfolgt über eine Stromleitung **14** von einer im Inneren eines Griffes **2** befindlichen Batterie **10** und über einen Ein / Aus- Schalter **11.** Die Stromleitung **14** kann natürlich auch verdeckt verlegt sein.

Die Durchleuchtungseinrichtung **8** ist unterhalb der Schneidöffnung **15** derart angeordnet, dass sie den Schneidvorgang nicht behindert, aber das Licht **19, 20** in die Nähe der Schneidöffnung **15** bringt und/oder der Lichtstrahl **19, 20** der Durchleuchtungseinrichtung **8** ist in einem Winkel auf die Schneidöffnung **15** gerichtet. Zum Auswechseln der Durchleuchtungseinrichtung **8** ist diese bevorzugt lösbar befestigt.

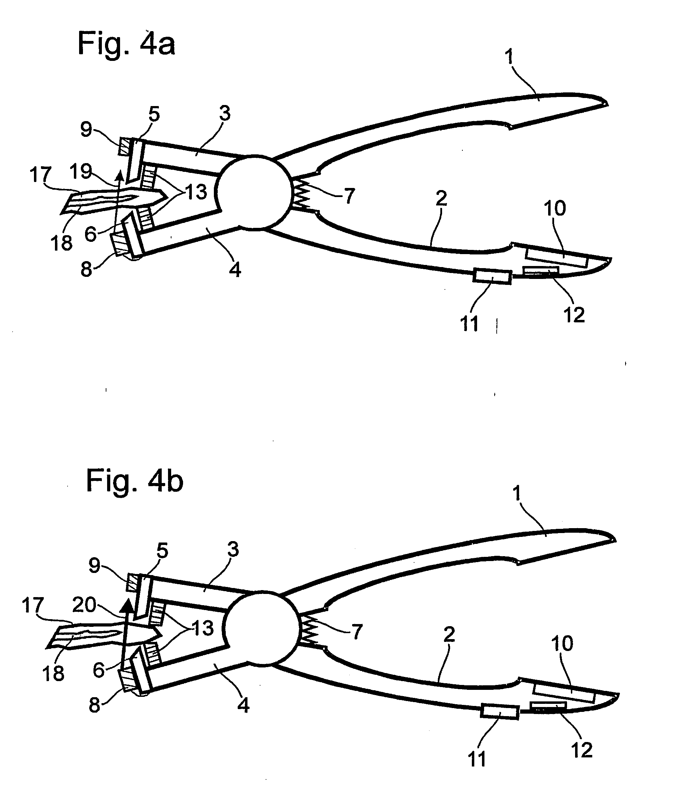

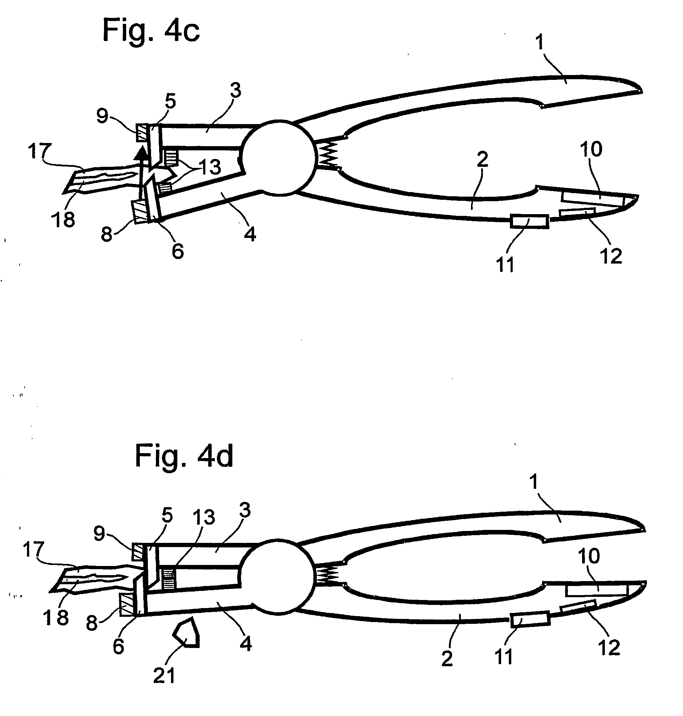

Die Form der Schermesser **5, 6,** die Schneidöffnung **15** und die Kraftübertragung von den Griffen **1, 2** auf die Schermesser **5, 6** ist vorzugsweise so gewählt, dass eine zu beschneidende Kralle **17** (dargestellt in **Fig. 4**) durch einen leichten manuellen Andruck der Griffe **1, 2** vor dem Schneiden fixiert wird, um den genauen Schnittpunkt sicher kontrollieren zu können.

Vorzugsweise ist, wie in den **Fig. 1** und Fig. **4** dargestellt, zur Fixierung der Kralle **17** hinter den Schermessern **5, 6** eine Festhalteeinrichtung **13** in Form eines flexiblen Körpers angeordnet. Die flexiblen Körper der Festhalteeinrichtung **13** sind in dieser Ausführung sowohl oben am oberen Schenkel **3** als auch unten am unteren Schenkel **4** derart befestigt und dimensioniert, dass die Kralle **17** bei einem leichten Druck auf die Griffe **1, 2** noch nicht von den Schermessern **5, 6** erfasst, aber bereits sicher festgehalten wird. Durch einen stärkeren Druck auf die Griffe **1, 2** geben die flexiblen Körper **13** nach und die Schermesser **5, 6** greifen in die Kralle **17** (siehe auch **Fig. 4**).

Ferner ist in **Fig. 1** am oberen Schermesser **5** ein Sensor **9** gegenüber der Durchleuchtungseinrichtung **8** befestigt, der die Absorption des Lichtes **19, 20** misst oder die spektrale Wellenlänge der roten Blutkörperchen **18** erfasst. Das Signal des Sensors **9** wird in geeigneter Weise, hier über einen Lautsprecher **12,** ausgegeben. Es könnte aber auch, wenn sich eine Blutader **18** im Bereich des Sensors **9** befindet, das Schneidwerkzeug blockiert werden.

Die Darstellung **Fig. 2** zeigt das Krallenschneidwerkzeug nach **Fig. 1** mit geöffneten Schermessern **5, 6** und einführbereiter Schneidöffnung **15** von vorn. Am unteren Schermesser **6** ist die Durchleuchtungseinrichtung **8** angeordnet und der Sensor **9** befindet sich in Opposition zu dieser.

**Fig. 3** zeigt den unteren Schenkel **4** des Krallenschneidwerkzeuges mit dem unteren Schermesser **6** und der Durchleuchtungseinrichtung **8** von unten betrachtet.

Der untere Schenkel **4** besitzt ferner eine Ausnehmung, die als Krallenauswurföffnung **16** dient.

Die Abbildungen **a, b, c** und **d** der **Fig. 4** erläutern die Wirkungsweise des Krallenschneidwerkzeuges während des Abschneidens einer Kralle **17.** In **Fig. 4a** wurde die Kralle **17** zu weit in die Schneidöffnung **15** eingeführt. Der Sensor 9 erkennt, beispielsweise durch die höhere Absorption des ausgesendeten Lichtes **19, 20,** hier dargestellt als geminderter Lichtstrahl **19,** oder durch eine spektrale Veränderung des Lichtes **19, 20** der Durchleuchtungsvorrichtung **8,** dass ein Blutgefäß **18** erfasst wurde. Der Lautsprecher **12** gibt in diesem Fall ein Signal ab.

Der an den Schenkeln **3** angebrachten flexiblen Körper **13,** die als Festhalteeinrichtung für die Kralle **17** dienen, fixieren die Kralle **17** und mindern gleichzeitig die Gefahr eines unbeabsichtigten vorzeitigen Abschneidens.

Das Schneidwerkzeug wird nun, wie in **Fig. 4b** dargestellt, soweit zurückgezogen, bis das Licht **19, 20** ungemindert (ungeminderter Lichtstrahl **20**) die Kralle **17** durchdringt. Die Kralle **17** befindet sich jetzt in der richtigen Position. Die Festhalteeinrichtung **13** sorgt weiterhin dafür, dass die Kralle **17** in dieser Lage bleibt und nicht verrutscht. Auch rein visuell lässt sich bei eingeschalteter Durchlichtvorrichtung **8** verfolgen, ob sich ein Blutgefäß **18** im Strahlengang und somit in der Schneidöffnung **15** befindet.

Der Krallenschnitt kann nun, wie in **Fig. 4c** dargestellt, an der richtigen Stelle, ohne die Blutgefäße **18** zu verletzen, durchgeführt werden. Beim Schnitt werden die flexiblen Körper der Festhalteeinrichtung **13,** die vorzugsweise aus Gummi bestehen, gestaucht, so dass dabei ein leichter Widerstand zu überwinden ist.

**Fig. 4d** zeigt schließlich die abgeschnittene Kralle **17** mit dem abgeschnittenen Krallenende **21,** das mittels des flexiblen Körpers **13** durch die Aussparung **16** im unteren Schenkel **4** ausgestoßen wurde.

### [Bezugszeichenliste]

- 1: oberer Griff
- 2: unterer Griff
- 3: oberer Schenkel
- 4: unterer Schenkel
- 5: oberes Schermesser
- 6: unteres Schermesser
- 7: Druckfeder
- 8: Durchleuchtungseinrichtung
- 9: optoelektronischer Sensor
- 10: Batteriefach mit Elektronikteil
- 11: Ein / Aus - Schalter
- 12: Lautsprecher
- 13: Flexible Körper, Festhalteeinrichtung
- 14: Stromleitung
- 15: Schneidöffnung
- 16: Krallenauswurfeinrichtung
- 17: Kralle
- 18: Blutgefäß
- 19: geminderter Lichtstrahl
- 20: ungeminderter Lichtstrahl
- 21: abgeschnittenes Krallenende

## Patentansprüche

1. Chirurgisches Krallenschneidwerkzeug mit zwei mittels zwei Griffen (1, 2) scheren- oder zangenförmig gegeneinander bewegbaren Schermessern (5, 6), die eine runde oder gewölbte Schneidöffnung (15) freigeben, **dadurch gekennzeichnet, dass** unterhalb der Schneidöffnung (15), fest verbunden mit einem Bauteil des Krallenschneidwerkzeuges, eine Durchleuchtungsvorrichtung (8) mit Leuchtmitteln derart angeordnet ist, dass der Lichtkegel (19, 20) der Leuchtmittel der Durchleuchtungsvorrichtung (8) auf die Schneidöffnung (15) gerichtet ist.

2. Krallenschneidwerkzeug nach Anspruch 1, **dadurch gekennzeichnet, dass** die Durchleuchtungseinrichtung (8) an dem unteren Schermesser (6) angeordnet ist.

3. Krallenschneidwerkzeug nach Anspruch 1 und 2, **dadurch gekennzeichnet, dass** zum Heranführen des Lichtes (19, 20) der Durchleuchtungsvorrichtung (8) an die Schneidöffnung (15) Lichtleiter angeordnet sind.

4. Krallenschneidwerkzeug nach Anspruch 1 und 2, **dadurch gekennzeichnet, dass** die Durchleuchtungsvorrichtung (8) aus einem transparenten Werkstoff besteht, in den die Leuchtmittel eingebettet sind.

5. Krallenschneidwerkzeug nach den vorangegangenen Ansprüchen, **dadurch gekennzeichnet, dass** die Leuchtmittel Leuchtdioden sind.

6. Krallenschneidwerkzeug nach den vorangegangenen Ansprüchen, **dadurch gekennzeichnet, dass** die Leuchtmittel mittels einer Stromleitung (14) über einen Ein / Aus- Schalter (11) mit einem Batteriefach (10) verbunden sind, das vorzugsweise in einem Griff (1 oder 2) des Krallenschneidwerkzeuges angeordnet ist.

7. Krallenschneidwerkzeug nach den vorangegangenen Ansprüchen, **dadurch gekennzeichnet, dass** für die Leuchtmittel unterschiedliche Beleuchtungsstärken einstellbar sind.

8. Krallenschneidwerkzeug nach den vorangegangenen Ansprüchen, **dadurch gekennzeichnet, dass** der Durchleuchtungsvorrichtung (8) ein Sensor (9) zugeordnet ist, der die spektrale Wellenlänge der roten Blutkörperchen (18) erfasst und/oder die Absorption des Lichtes (19, 20) misst.

9. Krallenschneidwerkzeug nach den vorangegangenen Ansprüchen, **dadurch gekennzeichnet, dass** an dem Krallenschneidwerkzeug vorzugsweise im Bereich der Schermesser (5, 6) eine Festhalteeinrichtung (13) angeordnet ist, die die Kralle (17) vor dem Schneidvorgang fixiert.

10. Krallenschneidwerkzeug nach den vorangegangenen Ansprüchen, **dadurch gekennzeichnet, dass** im unteren Schenkel (4) des Krallenschneidwerkzeuges eine Krallenauswurföffnung (16) angeordnet ist.

## Claims

1. A surgical claw-cutting tool with two shearing blades (5, 6) which can be moved toward one another in the manner of scissors or clippers by means of two handles (1, 2) and form a round or curved cutting opening (15), **characterized in that** a transilluminator (8) with lighting means is, firmly connected to a component of the claw-cutting tool, arranged below the cutting opening (15) in such a way that the light cone (19, 20) of the lighting means of the transilluminator (8) is directed toward the cutting opening (15).

2. The claw-cutting tool as claimed in claim 1, **characterized in that** the transilluminator (8) is arranged on the lower shearing blade (6).

3. The claw-cutting tool as claimed in claim 1 and 2, **characterized in that** light guides are provided for bringing the light (19, 20) of the transilluminator (8) to the cutting opening (15).

4. The claw-cutting tool as claimed in claim 1 and 2, **characterized in that** the transilluminator (8) is made from a transparent material into which the lighting means are embedded.

5. The claw-cutting tool as claimed in the preceding claims, **characterized in that** the lighting means are light-emitting diodes.

6. The claw-cutting tool as claimed in the preceding claims, **characterized in that** the lighting means are connected by means of a power line (14) via an on/off switch (11) to a battery compartment (10) which is preferably arranged in a handle (1 or 2) of the claw-cutting tool.

7. The claw-cutting tool as claimed in the preceding claims, **characterized in that** different illumination intensities can be set for the lighting means.

8. The claw-cutting tool as claimed in the preceding claims, **characterized in that** the transilluminator (8) is assigned a sensor (9) which detects the spectrai wavelength of the red blood cells (18) and/or measures the absorption of the light (19, 20).

9. The claw-cutting tool as claimed in the preceding claims, **characterized in that** a securing device (13) which fixes the claw (17) before the cutting operation is arranged on the claw-cutting tool, preferably in the region of the shearing blades (5,6).

10. The claw-cutting tool as claimed in the preceding claims, **characterized in that** a claw ejection opening (16) is provided in the lower leg (4) of the claw-cutting tool.

## Revendications

1. Outil chirurgical coupe-griffes, avec deux lames (5, 6) déplaçables l'une vers l'autre au moyen de deux branches (1, 2) en forme de ciseau ou de pince, une ouverture de coupe (15) ronde ou ovale étant ménagée entre lesdites lames, **caractérisé en ce qu'**un dispositif d'éclairage par lumière transmise (8) comportant des moyens d'éclairage est disposé sous l'ouverture de coupe (15), fixement raccordé à un composant de l'outil coupe-griffes, de telle manière que le cône lumineux (19, 20) des moyens d'éclairage du dispositif d'éclairage par lumière transmise (8) est dirigé vers l'ouverture de coupe (15).

2. Outil coupe-griffes selon la revendication 1, **caractérisé en ce que** le dispositif d'éclairage par lumière transmise (8) est disposé contre la lame inférieure (6).

3. Outil coupe-griffes selon les revendications 1 et 2, **caractérisé en ce que** des guides optiques sont prévus pour guider la lumière (19, 20) du dispositif d'éclairage par lumière transmise (8) sur l'ouverture de coupe (15).

4. Outil coupe-griffes selon les revendications 1 et 2, **caractérisé en ce que** le dispositif d'éclairage par lumière transmise (8) est formé par une matière transparente où sont incorporés les moyens d'éclairage.

5. Outil coupe-griffes selon les revendications précédentes, **caractérisé en ce que** les moyens d'éclairage sont des diodes électroluminescentes.

6. Outil coupe-griffes selon les revendications précédentes, **caractérisé en ce que** les moyens d'éclairage sont reliés à un compartiment à pile (10) par une conduction de courant (14) via un interrupteur ON/OFF (11), ledit compartiment à pile étant de préférence ménagé dans une branche (1 ou 2) de l'outil coupe-griffes.

7. Outil coupe-griffes selon les revendications précédentes, **caractérisé en ce que** différentes intensités d'éclairage sont réglables pour les moyens d'éclairage.

8. Outil coupe-griffes selon les revendications précédentes, **caractérisé en ce qu'**un capteur (9) est associé au dispositif d'éclairage par lumière transmise (8), lequel saisit la longueur d'onde spectrale des globules rouges (18) et/ou mesure l'absorption de la lumière (19, 20).

9. Outil coupe-griffes selon les revendications précédentes, **caractérisé en ce qu'**un dispositif de maintien (13) est prévu sur l'outil coupe-griffes, de préférence au niveau des lames (5, 6), lequel bloque la griffe (17) avant l'opération de coupe.

10. Outil coupe-griffes selon les revendications précédentes, **caractérisé en ce qu'**une ouverture d'éjection de griffe (16) est prévue dans la mâchoire inférieure (4) de l'outil coupe-griffes.
